# EUROPÄISCHE PATENTANMELDUNG

(11) **EP 0 972 924 A1**
(43) Veröffentlichungstag der Anmeldung: **19.01.2000**
(21) Anmeldenummer: 98113040.4
(22) Anmeldetag: 14.07.1998
(51) Int. Cl.: F02D 13/02, F02D 23/00, F02B 41/04

(54) **Verfahren zum Betrieb einer Hubkolben-Brennkraftmaschine**

(71) Anmelder: Konotech s.r.o., 150 00 Praha 5 (CZ)
(72) Erfinder: Perewusnyk, Josef, 5442 Fislisbach (CH)
(74) Vertreter: Patentanwälte Schaad, Balass, Menzl & Partner AG

(57) **Zusammenfassung**

Beim Verfahren zum Betrieb einer ein- oder mehrzylindrigen Hubkolben-Brennkraftmaschine (4) mit Abgasturbolader (1,2), insbesondere einer Viertakt-Hubkolben-Brennkraftmaschine, mit mindestens einem Einlassventil zum Zuführen der mit dem Abgasturbolader komprimierten Ladeluft in den Brennraum jedes Zylinders und mindestens einem Auslassventil für das Abführen der Verbrennungsgase aus dem Brennraum, schliest im Ansaug- bzw. Aufladetakt mindestens das eine Einlassventil zu einem Zeitpunkt, wo der Kolben wenigstens ein Viertel und nicht mehr als vier Fünftel des Hubs vom oberen Totpunkt zum unteren Totpunkt züruckgelegt hat.

## Beschreibung

Die Erfindung bezieht sich auf ein Verfahren zum Betrieb einer Hubkolben-Brennkraftmaschine, Insbesondere einer Viertakt-Hubkolben-Brennkraftmaschine nach dem Oberbegriff des Patentanspruchs 1.

Bei Hubkolben-Brennkraftmaschinen ohne Aufladung, sog. Saugmotoren, werden die Verbrennungsgase bzw. Auspuffgase ohne deren Energie zu nutzen in den Auspuff geleitet. Die Arbeit, welche für den Ladungswechsel der Zylinder benötigt wird, ist immer stark negativ und vermindert die Leistung des Motors bzw. deren Wirkungsgrad.

Bei Viertaktmotoren mit Turboaufladung wird nur ein Teil der Energie der Abgase genutzt. Bei Automobil-Motoren beispielsweise werden Abgase über eine sog. "Waste-Gate" an der Abgasturbine vorbei in den Auspuff geleitet oder es wird über einen Druckbegrenzer Ladeluft abgelassen, sobald ein gewisser Ladedruck erreicht wird.

Bei grossen stationären Motoren oder Schiffsmotoren wird die Energie der über die "Waste-Gate" abgelassenen Abgase noch mit sog. Nutzturbinen rückgewonnen. Diese Nutzturbinen sind entweder mechanisch mit der Kurbelwelle gekoppelt oder treiben einen Generator zum Erzeugen von elektrischer Energie. Diese Arten der Rückgewinnung von Energie und der Erhöhung des Gesamtwirkungsgrads sind teuer und haben relativ hohe Verluste sowie einen schlechten Wirkungsgrad. Die Installation derartiger Zusatzaggregate benötigt viel Raum.

In der Patentanmeldung WO 96/01939 ist eine Hubkolben-Brennkraftmaschine beschrieben, bei der Einlass- und Auslassventile so betätigt werden, dass das Expansionsverhältnis im Arbeitstakt grösser ist als das Kompressionsverhältnis im Verdichtungstakt. Der Zeitpunkt für das Öffnen und Schliessen von Ventilen kann veränderbar sein. Eine Aufladevorrichtung kann vorgesehen sein, um bei hohen Tourenzahlen das Füllen der Zylinder zu unterstützen.

Gegenstand der Erfindung ist es, ein Verfahren zu schaffen, das es ermöglicht, bei einer Hubkolben-Brennkraftmaschine auf einfache Art und Weise einen hohen Anteil der Energie der Auspuffgase rückzugewinnen.

Gelöst wird diese Aufgabe im wesentlichen durch die Merkmale des Patentanspruchs 1. Die abhängigen Ansprüche beziehen sich auf besonders vorteilhafte Ausführungsformen der Erfindung.

Wesentlich ist im Rahmen der Erfindung, dass die komprimierte Ladeluft den Zylinder-Kolbenanordnungen nur während eines vorgebbaren Teils des Saughubs zugeführt wird, d.h. dass das Einlassventil vorzeitig schliesst, d.h. insbesondere dann schliesst, wenn der Kolben wenigstens ein Vierteil und nicht mehr als vier Fünftel des Hubs vom oberen Totpunkt zum unteren Totpunkt zurückgelegt hat.

Vorteilhafterweise werden dabei die Verdichtung der Luft in der Zylinder-Kolbenanordnung und der Schliesszeitpunkt so gewählt, dass im unteren Totpunkt des Kolbens der Druck im Zylinder einen Wert von 1 bar bis höchstens 3 bar einnimmt.

Ein nach dem erfindungsgemässen Verfahren arbeitender Motor bleibt in der Konstruktion einfach und damit kostengünstig, da die Leistung des Abgasturboladers unmittelbar pneumatisch auf die Kolben des Verbrennungsmotors übertragen werden kann.

Die Turbine des Abgasturboladers wird vom gesamten Abgasstrom des Motors angetrieben. Der Verdichter des Aufladegebläses, der gewöhnlich auf der gleichen Welle wie die Abgasturbine sitzt, wird von der Abgasturbine angetrieben und verdichtet die Ladeluft auf einen höheren Druck. Damit es im Betrieb nicht zu einer Druckabsenkung im Ladeluftsystem kommt und die pneumatische Energieübertragung zur Hubkolben-Brennkraftmaschine optimal erfolgt, schliesst das Einlassventil bevor der Kolben im Zylinder den unteren Totpunkt erreicht.

Beim Füllen des Zylinders ist die Kraft auf den Kolben gleich dem Druck multipliziert mit der Fläche des Kolbens, so lange das Einlassventil geöffnet ist.

Die Arbeit am Kolben ist bei jedem Ladetakt gleich dem Produkt aus Druck multipliziert mit der Fläche des Kolbens und multipliziert mit dem Kolbenhub. Demgemäss ist die von der Ladeluft am Kolben erbrachte Leistung für einen Zylinder gleich dem Produkt aus Druck x Fläche des Kolbens x Zahl der Saug- bzw. Ladetakte pro Sekunde.

Nach dem Schliessen des Einlassventil wirkt die verdichtete Luft im Zylinder weiter auf den Kolben, wobei die Kraft im Ladetakt in Abhängigkeit zum sich vergrössernden Volumen exponentiell abnimmt. Im unteren Totpunkt entspricht der Druck im jeweiligen Zylinder noch dem Druck eines konventionellen Motors, insbesondere dem Druck eines konventionellen Motors mit Aufladung. Die Arbeit, welche die sich ausdehnende Luft nach dem Schliessen des Einlassventils bis zum unteren Totpunkt am Kolben erbringt, wird von den Auspuffgasen an der Abgasturbine erbracht, ist also rückgewonnene Arbeit bzw. Energie.

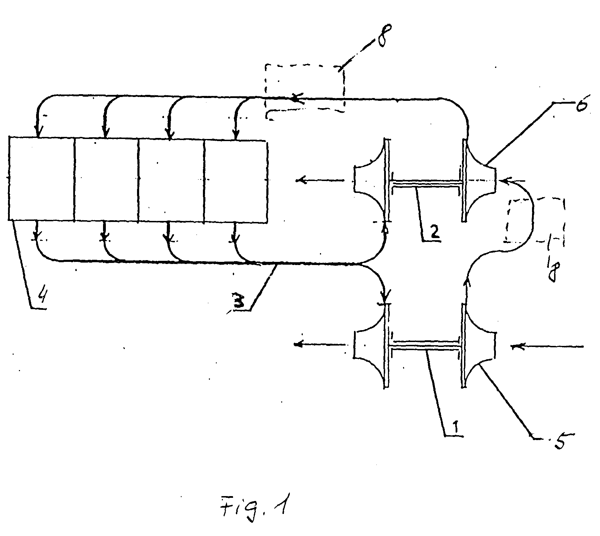

Anstelle eines einzigen Abgasturboladers können nach einer weiteren Ausführungsvariante der Erfindung gemäss Fig. 1 auch zwei Abgasturbolader 1, 2 verwendet werden, bei welchen die Gaszufuhr 3 vom Motor 4 her parallel, die Luftaustritte 5, 6 jedoch in Serie geschaltet sind. Mit 8 sind Ladeluftkühler bezeichnet.

Die aus den Abgasen gewonnene Energie wird in der sogenannten "verlängerten Expansion" mit geringem Verlust direkt dem Motor zugeführt. Dies führt zu einem verbesserten Wirkungsgrad des Motors und zu einer Senkung des spezifischen Brenn- bzw. Treibstoffverbrauchs.

## Patentansprüche

1. Verfahren zum Betrieb einer ein- oder mehrzylindrigen Hubkolben-Brennkraftmaschine mit Abgasturbolader, insbesondere einer Viertakt-Hubkolben-Brennkraftmaschine, mit mindestens einem Einlassventil zum Zuführen der mit dem Abgasturbolader komprimierten Ladeluft In den Brennraum jedes Zylinders und mindestens einem Auslassventil für das Abführen der Verbrennungsgase aus dem Brennraum,
dadurch **gekennzeichnet,**
dass die Zuführung komprimierter Ladeluft zu jeder Zylinder-Kolbenanordnung auf einen vorgebbaren Teil des Saughubs beschränkt wird.

2. Verfahren nach Anspruch 1,
dadurch **gekennzeichnet,**
dass im Ansaugtakt das Einlassventil oder die Einlassventile geschlossen werden, wenn der Kolben wenigstens ein Viertel und nicht mehr als vier Fünftel des Hubs vom oberen Totpunkt zum unteren Totpunkt zurückgelegt hat.

3. Verfahren nach Anspruch 2,
dadurch **gekennzeichnet,**
dass das Einlassventil geschlossen wird, wenn der Kolben ein Drittel bis drei Viertel des Hubs vom oberen Totpunkt zum unteren Totpunkt zurückgelegt hat.

4. Verfahren nach einem der vorhergehenden Ansprüche,
dadurch **gekennzeichnet,**
dass die Verdichtung der Ladeluft und der Schliesszeitpunkt so gewählt werden, dass im unteren Totpunkt des Kolbens der Druck Im Zylinder einen Wert im Bereich von 1 bar bis höchstens etwa 3 bar einnimmt.

5. Verfahren nach einem der vorhergehenden Ansprüche,
dadurch **gekennzeichnet,**
dass alle Abgase der Hubkolben-Brennkraftmaschine der Abgasturbine des Abgasturboladers zugeführt werden, um diese und damit das Aufladegebläse anzutreiben.

6. Verfahren nach einem der Ansprüche 1 bis 5
dadurch **gekennzeichnet**,
dass die vom Aufladegebläse des Abgasturboladers pro Sekunde verdichtete Luftmenge gleich dem halben Hubraumvolumen der Hubkolben-Brennkraftmaschine mal der Drehzahl der Hubkolben-Brennkraftmaschine pro Sekunde entspricht.

7. Verfahren nach einem der Ansprüche 1 bis 6
dadurch **gekennzeichnet,**
dass zwei Abgasturbolader verwendet werden, bei welchen die Gaszufuhr parallel und die Luftaustritte In Serie geschaltet sind.

8. Verfahren nach einem der Ansprüche 1 bis 7,
dadurch **gekennzeichnet,**
dass das mindestens eine Einlass- und/oder das mindestens eine Auslassventil über eine Ventilsteuerung veränderbar betätigt werden können.

9. Verfahren nach einem der Ansprüche 1 bis 8,
dadurch **gekennzeichnet,**
dass das Einlassventil in Abhängigkeit vom Druck der Luft in der Ladeluftzuführung betätigt wird.

10. Verfahren nach Anspruch 9,
dadurch **gekennzeichnet,**
dass das Einlassventil geschlossen wird, wenn der Druck der Luft In der Ladeluftzuführung einen vorgebbaren Wert unterschreitet.
